# FASCICULE DE BREVET EUROPEEN

(11) **EP 1 836 412 B1**
(45) Date de publication et mention de la délivrance du brevet: **22.06.2011**
(21) Numéro de dépôt: 06709398.9
(22) Date de dépôt: 10.01.2006
(51) Int. Cl.: F16H 7/24

(54) **DISPOSITIF POUR POSER ET DEPOSER UNE COURROIE ET PROCEDE RESPECTIVEMENT DE POSE ET DE DEPOSE D'UNE COURROIE**
VORRICHTUNG ZUM AUFLEGEN/ABNEHMEN EINES BANDES UND VERFAHREN ZUM INSTALLIEREN/ENTFERNEN EINES BANDES
DEVICE FOR INSTALLING AND REMOVING A BELT AND METHOD FOR INSTALLING AND REMOVING A BELT RESPECTIVELY

(30) Priorité: 11.01.2005 FR 0500271
(43) Date de publication de la demande: 26.09.2007
(73) Titulaire: PEUGEOT CITROËN AUTOMOBILES S.A., 78140 Vélizy Villacoublay (FR)
(72) Inventeur: VANHAREN, Vincent, F-27220 Chavigny-Bailleul (FR)
(74) Mandataire: Ménès, Catherine
(86) Numéro de dépôt international: PCT/FR2006/050010
(87) Numéro de publication internationale: WO 2006/075113

(56) Documents cités:
- WO-A-2005/024272
- DE-C- 461 460
- JP-U- 53 111 177
- US-A- 2 499 173
- US-A- 4 325 703
- US-A- 5 653 654

## Description

L'invention concerne le montage et le démontage d'une courroie dans un corps cylindrique de révolution tel une poulie. L'invention s'applique tout particulièrement aux opérations de pose et de dépose des courroies utilisées dans des véhicules automobiles.

Dès lors qu'une machine comporte au moins deux arbres dont l'un est doit entraîner l'autre, il est courant d'utiliser un moyen de transmission flexible, comme une courroie ou une chaîne. Cette courroie ou cette chaîne doit être mise en tension, par exemple au moyen d'un tendeur. Ce tendeur peut être fixe, et alors réglé après la pose de la courroie ou de la chaîne soit dynamique, pour permettre une variation de la tension en fonction du travail qui est effectué par la machine. Pour toute machine équipée d'un tendeur, une action sur celui-ci permet de libérer la contrainte de tension exercée sur la courroie ou la chaîne pour permettre la mise en place - ou la dépose - de celle-ci.

Il est également possible de se dispenser du tendeur en recourant à des courroies élastiques qui sont montées par mises en extension. Même si la suppression du tendeur représente un avantage important, l'utilisation de telles courroies élastiques n'est pas non plus sans poser problème. En effet, l'étirement maximum autorisé sous peine de rupture - ou à tout le moins de dégradation de la courroie - est relativement faible, de sorte que les opérations de pose - et de dépose - sont risquées, le risque augmentant en général avec le nombre de poulies reliées par la courroie.

Il doit de plus être souligné que ce risque est d'autant plus grand que la pose - ou la dépose - sont réalisées non sur une ligne traditionnelle de montage mais dans un atelier d'entretien, les garagistes ne pouvant pas disposer d'outils optimisés pour tous les véhicules dont ils assurent l'entretien.

En fait, même avec un montage classique avec un tendeur, il est toujours relativement délicat de monter une courroie sur un corps cylindrique tel une poulie, car la jante comportant une gorge annulaire d'entraînement, les bords de la jante constituent souvent des pièces coupantes qui peuvent trancher la courroie si des précautions ne sont pas prises au montage.

C'est pourquoi différents outillages spécifiques ont été développés. Ainsi, la demande de brevet français 2855777 décrit par ailleurs un outil de montage spécialement destiné au montage d'une courroie élastique dans la gorge d'une poulie. Cet outil comporte une plaque, deux pattes de maintien et une plaque latérale de guidage. La dépose de la courroie n'est pas mentionnée.
Le document US2499173 est considéré comme l'art antérieure le plus proche.

Il subsiste donc un besoin d'un outil de maniement simple et surtout particulièrement adapté pour la dépose d'une courroie - notamment mais non exclusivement une courroie élastique - sur un corps cylindrique, comme par exemple une poulie.

Selon l'invention, ce but est atteint par un dispositif en U apte à chausser la gorge latéralement de sorte que l'une des branches du U couvre temporairement un secteur circonférentiel de la poulie.

Conformément à l'invention, le dispositif n'est donc pas destiné à enfourcher la poulie de sorte que la base du U recouvre un secteur circonférentiel mais à être placé latéralement, la zone de recouvrement étant constituée par une des branches du U.

Dans l'invention, les deux joues sont mobiles l'une par rapport à l'autre et sont associées au niveau de la base du U, par au moins un tenon.

Ceci revient donc à dissocier la fonction de support de la courroie lors de la pose (et la dépose) de la fonction d'ajustement de l'outil à la taille de la poulie. Comme la courroie ne repose à aucun moment sur la base du U, il est possible qu'un espace subsiste entre les deux branches (cas d'une poulie à jante large) sans que la fonction de guidage de la courroie ne soit en rien affectée.

Le dispositif selon l'invention permet également de modifier le chemin de la courroie de manière à la faire sortir de la gorge annulaire dans laquelle elle est logée pour la monter à la circonférence du corps cylindrique. Une fois montée à ce niveau radial, la courroie peut être déplacée axialement pour la déposer.

Le dispositif selon l'invention est tout particulièrement destiné aux garagistes et est adapter aux interventions sur la courroie dite de transmission qui relie le vilebrequin à l'arbre de commande des soupapes ou encore sur la courroie dites accessoires. Pour autant, il peut également trouver application pour le montage ou le démontage de toute courroie dans une gorge annulaire. Ainsi, le terme "corps cylindrique de révolution" désigne aussi bien des poulies que des axes ou tiges comportant une gorge annulaire destinée à loger la courroie lorsqu'elle est posée.

Le but de l'invention est également atteint par un procédé de pose d'une courroie sur la gorge annulaire d'un corps cylindrique comportant la mise en place d'un dispositif en U pour recouvrir la gorge annulaire sur un secteur circonférentiel du corps cylindrique à l'aide d'une des branches du U, l'engagement de la courroie sur ladite branche et sur un autre corps cylindrique destiné à être relié au premier par la courroie, l'alignement de la courroie sur les gorges annulaires des deux corps cylindriques, la rotation des corps cylindriques jusqu'à ce que la branche du dispositif en U soit dégagée de la courroie et le retrait du dispositif en U.

Corollairement, l'invention concerne également un procédé de dépose d'une courroie logée dans la gorge annulaire de corps cylindriques de révolution comportant la mise en place d'un dispositif en U, de sorte qu'une des branches du U recouvre la gorge annulaire sur un secteur circonférentiel du corps cylindrique non occupé par la courroie, la rotation des corps cylindriques jusqu'à ce que la courroie soit engagée sur ladite branche du U, l'enlèvement de la courroie et le retrait du dispositif en U.

Avantageusement, les procédés respectivement de poser ou de déposer une courroie selon l'invention sont mis en oeuvre à l'aide d'un dispositif pour poser et pour déposer une courroie tel que décrit plus haut.

L'invention permet ainsi la pose et la dépose de courroies élastiques sans les endommager et avec un étirement restant largement à l'intérieur des limites d'élasticité. Ainsi, il n'est plus nécessaire, à chaque occasion de dépose d'une courroie, de la remplacer par une nouvelle courroie. De plus, chaque type de courroie élastique peut couvrir une gamme plus large d'architectures de transmission par courroie, ce qui rend cette solution de invention aussi très économique et notamment standard.

D'autres caractéristiques et avantages de la présente invention ressortiront de la description ci-après de trois modes de réalisation du dispositif de l'invention et d'une description de la mise en oeuvre du dispositif. Ces descriptions sont faites en référence aux dessins dans lesquels :

la figure 1 montre, en coupe, un dispositif selon une première variante de l'invention non revendiquée

la figure 2, montre, en perspective, le dispositif de la figure 1 lors de la pose d'une courroie sur une poulie

la figure 3, montre en perspective, un dispositif selon l'invention.

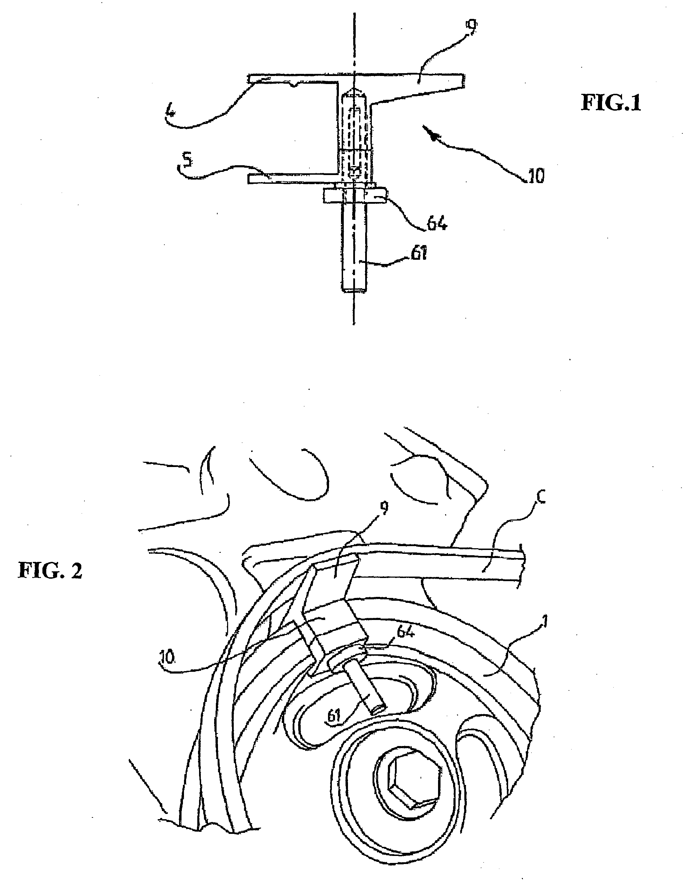

Le dispositif est destiné à permettre le montage d'une courroie élastique C dans la gorge d'une poulie ajourée 1 comme illustré figure 1. Comme illustré de façon plus détaillée à la figure 2, le dispositif a la forme générale d'un outil en U et comporte deux joues 4 et 5. La joue 4 - encore appelée joue de couverture, vient recouvrir temporairement un secteur circonférentiel de la gorge de la poulie. "Temporairement" signifie : pour la pose ou la dépose de la courroie.

La joue 4 est réalisée en une seule pièce en forme de L. La joue 5 représentée aux figures 1 et 2 est en forme de T, avec une patte de retenue 9 qui permet d'éviter que la courroie C, lorsqu'elle est sortie de la gorge de la poulie puisse être poussée par exemple entre la poulie et la machine sur laquelle la poulie est montée.

Les deux joues sont montées mobiles l'une par rapport à l'autre sur une tige 61. Dans la variante ici représentée, cette tige est au moins partiellement filetée et fait partie d'un moyen de serrage 6 auquel appartient également une molette 64 engagée sur la tige 61. La molette 64 peut être remplacée par exemple par un écrou traditionnel à six pans ou par un écrou à oreilles. La longueur de la tige est déterminée de manière à assurer une course suffisamment longue à la molette pour pouvoir exercer la fonction de serrage dans les limites d'espacement prédéterminées des joues 4, 5.

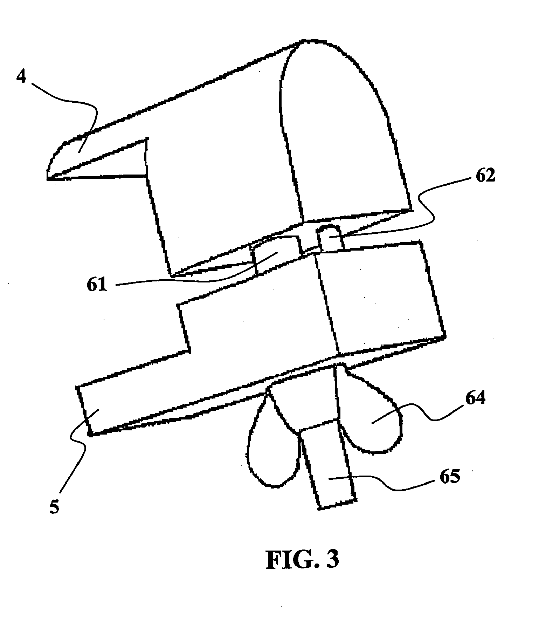

Dans la variante de l'invention, illustrée figure 3, la joue 4 est comme la joue 5 en forme de L, la base du U étant relativement élargie. Cette variante permet de loger dans la base non seulement une tige filetée mais également au moins un tenon 62, associé à la joue 5 qui vient coopérer avec un logement prévu dans la joue 4. En variante, le tenon peut être remplacé par une tige coulissante, auquel cas un logement sera également prévu dans la joue 5.

Le dispositif selon l'invention présente l'avantage de pouvoir être utilisé pour de nombreuses poulies à l'intérieur d'une gamme de diamètres et de largeurs prédéterminée. En effet, la joue 4 présente une surface extérieure sensiblement plane ou, de préférence, courbe. Cette joue 4 forme un support stable pour la courroie, quel que soit l'écartement des joues. La longueur de la surface extérieure de la joue 4, dans le sens du pourtour de la poulie, peut être déterminée de manière à pouvoir couvrir un secteur circonférentiel de la poulie de l'ordre de 10° à 20° environ. Lorsque la surface extérieure est courbe, le rayon de cette courbure peut correspondre approximativement au rayon de la poulie. Lorsque le rayon définissant la courbure de la surface extérieure 34 de l'élément de couverture 3 dépasse le rayon de la poulie d'un ordre de grandeur de 10 %, le dispositif 10 risque d'exercer des efforts nuisibles sur la courroie C par les bords avant et arrière, dans le sens du pourtour de la poulie, au moment ou le dispositif pousse la courroie vers l'extérieur. En contrepartie, lorsque le rayon définissant la courbure de la surface d'appui 34 du dispositif 10 est inférieure au rayon de la poulie, d'un ordre de grandeur de 10 à 15 %, la partie centrale de cette surface risque d'exercer des efforts très grands sur la courroie au moment où celle-ci est poussée vers l'extérieur.

Quel que soit le mode de réalisation choisi du dispositif de invention ou quelle que soit la variante décrite plus haut ou ressortant aisément à la lecture de cette description, le procédé de pose d'une courroie sur un corps cylindrique de révolution sera mis en oeuvre de la manière suivante : on couvre la gorge annulaire d'un corps cylindrique 1 sur un secteur circonférentiel de celui-ci à l'aide d'une joue 4 en installant un outil 10; le corps cylindrique 1 choisi est en général celui parmi les corps cylindriques à relier par la courroie, qui présente le plus grand diamètre ; toutefois, on peut également choisir un autre corps cylindrique parmi ceux-ci sans sortir du principe de la présente invention. On engage ensuite une courroie C sur la surface extérieure de la joue 4 et sur le (ou les) autre(s) corps cylindrique(s) destiné(s) à être relié(s) au premier corps cylindrique par la courroie. On aligne la courroie sur les gorges annulaires 2 des corps cylindriques à relier et on fait tourner les corps cylindriques jusqu'à ce que la joue de couverture 4 soit dégagée de la courroie et retire l'outil pour dégager la gorge annulaire.

De manière correspondante, le procédé de dépose d'une courroie d'un corps cylindrique de révolution sera mis en oeuvre de la manière suivante : on recouvre la gorge annulaire 2 d'un premier corps cylindriques 1 relié à un autre corps cylindrique par une courroie C, sur un secteur circonférentiel non occupé par la courroie, à l'aide d'une joue 4. On fait tourner le corps cylindrique 1 jusqu'à ce que la courroie soit engagée sur la joue de couverture 4. On enlève la courroie de la joue 4 et on retire ou escamote la joue 4.

## Revendications

1. Dispositif (10) pour poser et déposer une courroie (C) sur un corps cylindrique (1) de révolution comportant une jante ajourée et une gorge annulaire pour le logement de la courroie posée, ce dispositif étant constitué par un U comportant deux joues (4,5) permettant de chausser le côté de la gorge de sorte que la joue (4), ou joue de couverture (4) couvre la gorge annulaire temporairement, sur un secteur circonférentiel du corps cylindrique, les deux joues sont mobiles l'une par rapport à l'autre et sont en forme de L et associées au niveau de la base du U par au moins un tenon (62).

2. Dispositif selon la revendication 1, **caractérisé en ce que** qu'il comporte de au moins une tige de coulissement (7) et des moyens de serrage (6).

3. Dispositif selon l'une quelconque des revendications précédentes, **caractérisée en ce que** la branche de couverture (4) comprend une surface extérieure courbe.

4. Procédé de pose d'une courroie sur un corps cylindrique comportant une gorge annulaire destinée à loger la courroie posée, comprenant les étapes suivantes :
a. Mise en place d'un dispositif (10) en U pour recouvrir la gorge annulaire sur un secteur circonférentiel du corps cylindrique à l'aide d'une des branches du U ;
b. Engagement de la courroie (C) sur ladite branche et sur un autre corps cylindrique destiné à être relié au premier par la courroie,
c. Alignement de la courroie (C) sur les gorges annulaires (2) des deux corps cylindriques (1),
d. Rotation des corps cylindriques (1) jusqu'à ce que la branche du dispositif en U soit dégagée de la courroie et ;
e. Retrait du dispositif (10) en U.

5. Procédé de dépose d'une courroie logée dans la gorge annulaire (2) de corps cylindrique de révolution, comprenant les étapes suivantes :
a. Mise en place d'un dispositif (10) en U, de sorte qu'une des branches du U recouvre la gorge annulaire (2) sur un secteur circonférentiel d'un corps cylindrique (1) non occupé par la courroie,
b. Rotation des corps cylindriques (1) jusqu'à ce que la courroie (C) soit engagée sur ladite branche du U;
c. Enlèvement de la courroie (C) et ;
d. Retrait du dispositif (10) en U.

## Claims

1. A device (10) for laying down and taking up a belt (C) on a cylindrical body (1) of revolution comprising an apertured rim and an annular neck for accommodating the belt which is laid down, this device consisting of a U-shape having two flanges (4, 5) for fitting to the side of the neck so that the flange (4) or covering flange (4) temporarily covers the annular neck on a circumferential sector of the cylindrical body, the two flanges being movable with respect to one another and having an L-shape and being connected at the bottom of the U by at least one tenon (62).

2. The device according to claim 1, **characterised in that** it comprises at least one sliding rod (7) and clamping means (6).

3. The device according to any of the preceding claims, **characterised in that** the covering branch (4) comprises a curved outside surface.

4. A method for laying down a belt on a cylindrical body comprising an annular neck for accommodating the belt being laid down, comprising the following steps:
a) positioning a U-shaped device (10) so as to cover the annular neck on a circumferential sector of the cylindrical body with one of the branches of the U;
b) engaging the belt (C) on said branch and on another cylindrical body which is to be connected to the first body by the belt,
c) aligning the belt (C) on the annular necks (2) of the two cylindrical bodies (1),
d) rotating the cylindrical bodies (1) until the branch of the U-shaped device is disengaged from the belt; and
e) withdrawing the U-shaped device (10).

5. A method for taking up a belt accommodated in the annular neck (2) of a cylindrical body of revolution, comprising the following steps:
a) positioning a U-shaped device (10) so that one of the branches of the U covers the annular neck (2) on a circumferential sector of the cylindrical body (1) not occupied by the belt,
b) rotating the cylindrical bodies (1) until the belt (C) is engaged on said branch of the U;
c) removing the belt (C); and
d) withdrawing the U-shaped device (10).

## Patentansprüche

1. Vorrichtung (10) zum Aufziehen und Abziehen eines Riemens (C) auf bzw. von einem drehzylindrischen Körper (1), umfassend eine gelochte Felge und eine ringförmige Auskehlung zur Aufnahme des aufgezogenen Riemens, wobei diese Vorrichtung aus einem U besteht, das zwei Backen (4, 5) umfasst, die es ermöglichen, die Seite der Auskehlung zu beziehen, so dass die Backe (4) oder die Abdeckbacke (4) die ringförmige Auskehlung auf einem Umfangssektor des zylindrischen Körpers zeitweilig bedeckt, wobei die beiden Backen im Verhältnis zueinander beweglich und L-förmig sind und an der Basis des U durch mindestens einen Stift (62) verbunden sind.

2. Vorrichtung nach Anspruch 1, **dadurch gekennzeichnet, dass** sie mindestens einen Gleitstab (7) und Klemmmittel (6) umfasst.

3. Vorrichtung nach einem der vorhergehenden Ansprüche, **dadurch gekennzeichnet, dass** der Abdeckschenkel (4) eine gekrümmte äußere Oberfläche umfasst.

4. Verfahren zum Aufziehen eines Riemens auf einen zylindrischen Körper, der eine ringförmige Auskehlung umfasst, die dazu bestimmt ist, den aufgezogenen Riemen aufzunehmen, umfassend die folgenden Schritte:
a) Anbringen einer U-förmigen Vorrichtung (10), um die ringförmige Auskehlung auf einem Umfangssektor des zylindrischen Körpers mit Hilfe eines der U-Schenkel zu bedecken;
b) Aufschieben des Riemens (C) auf den Schenkel und auf einen anderen zylindrischen Körper, der dazu bestimmt ist, mit dem ersten durch den Riemen verbunden zu werden;
c) Ausrichten des Riemens (C) auf den ringförmigen Auskehlungen (2) der beiden zylindrischen Körper (1),
d) Drehen der zylindrischen Körper (1), bis der Schenkel der U-förmigen Vorrichtung von dem Riemen befreit ist; und
e) Abnehmen der U-förmigen Vorrichtung (10).

5. Verfahren zum Abziehen eines Riemens, der in der ringförmigen Auskehlung (2) eines drehzylindrischen Körpers aufgenommen ist, umfassend die folgenden Schritte:
a) Anbringen einer U-förmigen Vorrichtung (10), so dass einer der U-Schenkel die ringförmige Auskehlung (2) auf einem Umfangssektor eines zylindrischen Körpers (1), der nicht von dem Riemen besetzt ist, bedeckt;
b) Drehen der zylindrischen Körper (1), bis der Riemen (C) auf den U-Schenkel aufgeschoben ist;
c) Entfernen des Riemens (C); und
d) Abnehmen der U-förmigen Vorrichtung (10).
